# EUROPÄISCHE PATENTSCHRIFT

(11) **EP 0 825 525 B1**
(45) Veröffentlichungstag und Bekanntmachung des Hinweises auf die Patenterteilung: **19.01.2000**
(21) Anmeldenummer: 96440063.4
(22) Anmeldetag: 20.08.1996
(51) Int. Cl.: G06F 9/46

(54) **Verfahren zur Unterstützung des Erzeugens eines Objektes**
Method for supporting the creation of objects
Procédé pour la création d'objets

(43) Veröffentlichungstag der Anmeldung: 25.02.1998
(73) Patentinhaber: ALCATEL, 75008 Paris (FR)
(72) Erfinder: Carre, Laurent, 78960 Voisins-le-Bretonneux (FR); Potonniee, Olivier, 75011 Paris (FR)
(74) Vertreter: Kugler, Hermann, Dipl.-Phys.

(56) Entgegenhaltungen:
- SIGMOD RECORD, Bd. 23, Nr. 2, Juni 1994, Seite 479 XP000607948 MARTIN B E: "COSS: THE COMMON OBJECT SERVICES SPECIFICATIONS"
- INTERNATIONAL CONFERENCE ON DISTRIBUTED COMPUTING SYSTEMS, SAN JOSE, JUNE 13 - 17, 1988, 13.Juni 1988, INSTITUTE OF ELECTRICAL AND ELECTRONICS ENGINEERS, Seiten 18-24, XP000092920 KENTARO SHIMIZU ET AL: "HIERARCHICAL OBJECT GROUPS IN DISTRIBUTED OPERATING SYSTEMS"

## Beschreibung

Die Erfindung betrifft ein Verfahren zur Unterstützung des Erzeugens eines ersten Objektes in einer Objekt Umgebung, in der das erste und weitere Objekte über CORBA-Mechanismen interagieren, nach dem Oberbegriff von Anspruch 1, Verfahren zum Erzeugen und zum Löschen eines ersten Objektes nach dem Oberbegriff von Anspruch 6 bzw. 7, und eine Rechnereinheit nach dem Oberbegriff von Anspruch 8.

Für die softwaremäßige Realisierung von verteilten Computersystemen wird zunehmend die objektorientierte Modellierung als Architekturprinzip verwendet. Eine solche Software - Architektur eines Computersystems ist die CORBA - Architektur (CORBA = Common Object Request Broker Architecture), die eine bedeutende Komponente der von der Object Management Group (OMG) spezifizierten OSA-Architektur (OSA = Object Service Architecture) ist.

Die Erfindung geht nun von dem Verfahren aus, wie Objekte (Managed Objects) normalerweise in einem Computersystem nach der CORBA - Architektur erzeugt und gelöscht werden. Dies ist beispielsweise in "Common Object Request Broker: Archtitecture and Specification r2.0", Object Management Group, Framingham, Massachusetts, 1995, beschrieben.

Das Erzeugen und das Löschen von Objekten wird von speziellen Objekten durchgeführt, den Generierungs-Objekten (factories). Die ausschließliche Funktion eines solchen Generierungs-Objektes ist es, dieses Löschen und Erzeugen von Objekten für bestimmte Arten von Objekten durchzuführen. Zur Definition solcher Generierungs-Objekte wird ein spezieller Dienst, der LifeCycle Dienst, verwendet. Ein allgemeines Generierungs-Objekt steht zur Verfügung. Von diesem ausgehend können auch spezielle Generierungs-Objekte für jede Art von Objekten, z.b. bestimmte Klassen von Objekten (object class) definiert werden, die die Eingabe spezieller Erzeugungsparameter erlauben.

Um nun ein spezielles Objekt zu Erzeugen oder zu Löschen, muß zuerst das für die Erzeugung und das Löschen dieses speziellen Objekts zuständige Generierungsobjekt gefunden werden. Hierzu wird eine Suchnachricht an einen speziellen Dienst, den FactorieFinder Dienst, der ein Teil des LifeCycle Dienstes ist, gesendet und die Suchkriterien (Typ, Ort,..) für diese Suche angegeben. Ist das zuständige Generierungsobjekt gefunden, so wird eine Anforderungsnachricht (invocation) an das Generierungsobjekt gesendet, das daraufhin ein Objekt entsprechend der in der Anforderungsnachricht angegebenen Parameter erzeugt oder löscht.

Der Nachteil dieser Vorgehensweise besteht darin, daß das Aufinden eines geeigneten Generierungsobjektes in der Regel sehr aufwendig ist und eine weitere Kommunikationsbelastung des Computersystems verursacht.

Der Erfindung liegt nun die Aufgabe zugrunde, die Systembelastung in einem auf einer CORBA - Architektur beruhenden Computersystem zu reduzieren.

Diese Aufgabe wird gelöst durch Verfahren nach der Lehre von Anspruch 1, 6 und7, und durch eine Rechnereinheit nach der Lehre von Anspruch 8.

Der Erfindung liegt hierbei der Gedanke zugrunde, daß Objekte in einer CORBA- Umgebung für das Erzeugen oder das Löschen der ihnen unmittelbar nachfolgenden Objekte (descendant objects) im Abhängigkeitsbaum (containment tree) zuständig sind. Sie übernehmen somit zusätzlich die Rolle von Generierungs-Objekten für ihre Kind-Objekte (child objects).

Durch diese von der CORBA-Philosophie abweichende Vorgehensweise ergeben sich weitere Vorteile:

Die Anzahl der Objekte in dem Computersystem wird reduziert. Dadurch reduziert sich auch die Systembelastung und die Anzahl der Referenzen.

Weiter entfällt der Zugriff auf den FaktoryFinder Dienst und die Prozessorbelastung durch den Suchvorgang.

Weiter wird die System-Konsistenz verbessert. Ein nachfolgendes Objekt wird nur erzeugt, wenn sein Vorgänger im Abhängigkeitsbaum vorhanden ist.

Weitere Vorteile ergeben sich bei hybriden System im Bereich des Netzwerkmanagement, bei denen ein Netzwerkmanagement-System basierend auf CORBA realisiert wird. Zum einen können hier für die Erzeugungs- und Löschfunktionen CMISE Dienste verwendet werden, die aus einem einfachen Interface vererbt werden, in dem alle CMISE Dienste enthalten sind.

Im Folgenden wird die Erfindung anhand dreier Ausführungsbeispiele unter Zuhilfenahme beiliegender Zeichnungen beispielhaft erläutert:
Fig. 1a zeigt eine Blockschaltbild eines Computersystems für ein erstes Ausführungsbeispiel.
Fig. 1b zeigt eine funktionelle Darstellung der Software Struktur des Computersystems nach Fig.1.
Fig. 2 zeigt eine symbolische Darstellung von Abhängigkeitsverhältnissen zwischen Objekten.
Fig. 3 zeigt einen Ausschnitt aus einer Interface-Beschreibung in einer Darstellung in einer symbolischen Beschreibungsphase.
Fig. 4a zeigt eine funktionelle Darstellung der Software Struktur eines Computersystems für ein zweites Ausführungsbeispiel.
Fig. 4b zeigt eine funktionelle Darstellung der Software Struktur eines Computersystems für ein drittes Ausführungsbeispiel.

In einem ersten Ausführungsbeispiel wird die Durchführung der erfindungsgemäßen Verfahren in einem Computersystem beschrieben, das aus einem oder aus mehreren erfindungsgemäßen Rechnereinrichtungen besteht, auf denen jeweils ein Programm-Modul abläuft.

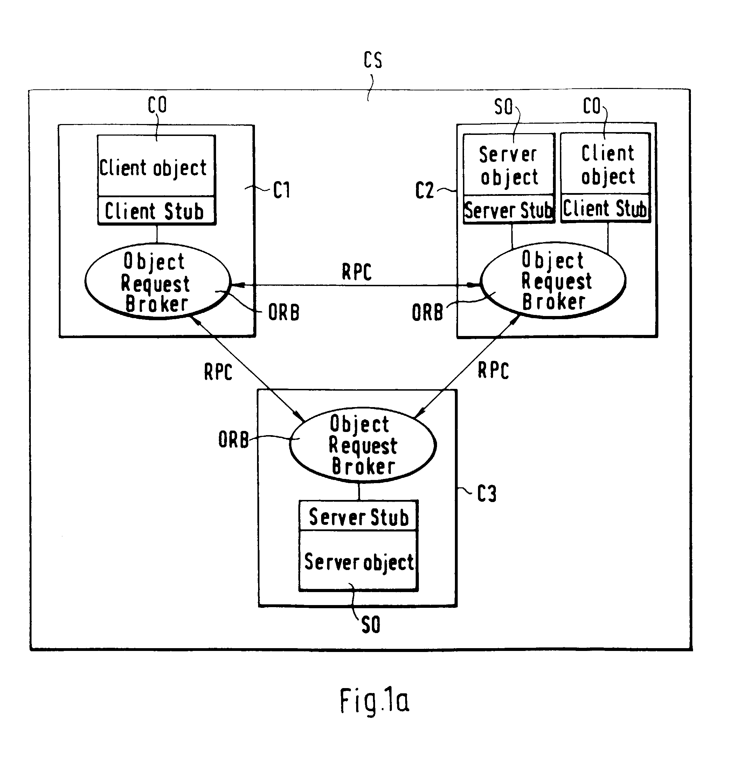

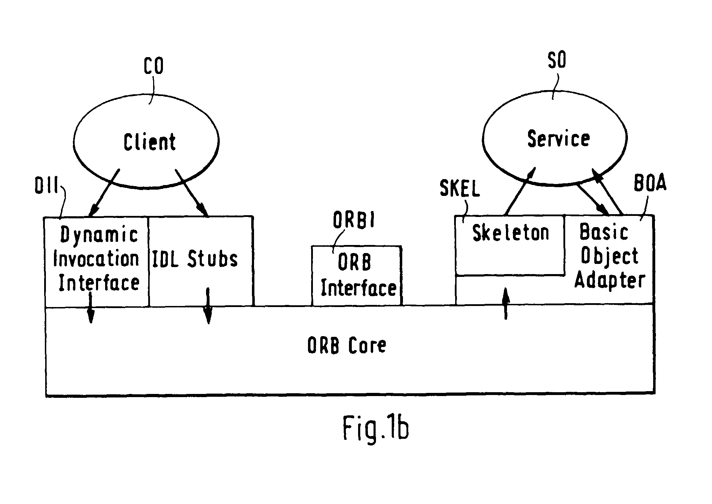

Fig. 1 zeigt ein Rechnersystem CS mit drei Rechnereinheiten C1 bis C3, die untereinander kommunizieren.

Bei den Rechnereinheiten C1 bis C3 handelt es sich beispielsweis um Computer, Drucker oder um Netzelemente eines Kommunikationsnetzes. Sie weisen jeweils eine Hardware-Plattform, bestehend aus Prozessoren, Speichereinrichtungen und peripheren Komponenten, eine Software-Plattform, die beispielsweise ein Betriebssystem und ein Datenbanksystem umfaßt und Anwendungen auf, die von auf der Software-Plattform ablaufenden Anwendungs-Programm-Modulen gebildet werden. Die Rechnereinheiten C1 bis C3 sind durch ein oder mehrere Kommunikationsnetze untereinander verbunden, beispielsweise durch X.25, #7, Ethernt oder Token-Ring Kommunikationssysteme. Die Software-Plattform der Rechnereinheiten C1 bis C3 stellt hierbei die notwendigen Datenübertragungsdienste bereit.

Die Anwendungs-Programm-Module sind als Objekte (Managed object) modelliert, d. h. der Code und die Daten eines Objektes werden durch eine Summe von Attributen und Funktionen repräsentiert, auf die andere Objekte zugreifen können. Durch das wechselseitige Zugreifen einer Vielzahl solcher Objekte werden sodann die Anwendungsfunktionen des Computersystems CS erbracht.

Gemäß der CORBA-Architektur weisen die Rechnereinheiten C1 bis C3 mehrere Objekte CO und SO und mehrere Objekt-Anforderungs-Broker (Object Request Broker) ORB auf.

Aus der Dienstsicht können die Objekte CO und SO jeweils als eine verkapselte Einheit betrachtet werden, die einen oder mehrere Dienste zur Verfügung stellt, die von einem Klienten (client) angefordert werden können. Die Objekte CO fordern hierbei Dienste an (Client Object), die von den Objekten SO erbracht werden (Server Objects).

Zum Anfordern eines Dienstes sendet ein CO eine Anforderungs-Nachricht (request) an ein SO. Eine solche Anforderungs-Nachricht enthält hierbei folgende Informationen: eine Operation, ein Ziel-Objekt, keinen oder mehrere Parameter und optional einen Anforderungs-Kontext (request context). Nach Erbringen des Dienstes sendet das SO eine Ergebnis-Nachricht (outcome) an das CO zurück, das für diese Anforderungsnachricht definiert ist.

Zum Senden und zum Empfang der Anforderungs- und Ergebnisnachrichten steht den Objekten SO und CO eine Schnittstelleneinheit IU zur Verfügung.

Die Objekt-Anforderungs-Broker (ORB) stellen eine Infrastruktur zur Verfügung, die es den Objekten erlaubt, in einer verteilten Umgebung zu kommunizieren. Für die Objekte CO ist es damit nicht von Bedeutung auf welcher der anderen der Rechnereinheiten C1 bis C3 ein Objekt SO, dessen Dienst sie anfordern wollen, angesiedelt ist und auf welcher speziellen Plattform oder in welchem Implementierungsverfahren das Objekt realisiert ist.

Jedes Objekt kennt hierzu zumindest einen Objekt-Anforderungs-Broker ORB und weiß, wie sie diesen lokalen Objekt-Anforderungs-Broker zu kontaktieren hat. Jeder Objekt-Anforderungs-Broker weiß wie er andere Objekt-Anforderungs-Broker kontaktieren kann und wie er mit ihnen zu kommunizieren hat. Hierfür verwendet er das RPC-Verfahren (RPC = remote procedure call mechanisms). Ein Objekt sendet somit eine Anforderungsnachricht an einen der Objekt-Anforderungs-Broker ORB, das Weiterreichen der Anforderungsnachricht an das Ziel-Objekt wird durch die von dem Objekt-Anforderungs-Broker ORB gebildete CORBA-Infrastruktur erledigt.

Fig. 1b zeigt eine Darstellung der Kommunikationsmechanismen für die Kommunikation zwischen einem CO und einem SO. Fig. 1b zeigt eine Kommunikationsschicht ORB Core, eine darüberliegende Kommunikationsschicht mit fünf Funktionseinheiten DII, IDLSubs, ORBI, SKEL und BOA und zwei auf diese Funktionseinheiten zugreifende Objekte CO und SO.

Um über die CORBA-Infrastruktur kommunizieren zu können und mit anderen Objekten auf dieser Infrastruktur zusammenarbeiten zu können, muß jedes der Objekte CO und SO über eine CORBA spezifische Schnittstelle (Interface) verfügen. Ein solche Schnittstelle enthält hierbei eine Beschreibung eines Satzes von möglichen Operationen, die ein anderes Objekt von diesem Objekt anfordern kann. Die Schnittstellen der Objekte sind hierbei in der Beschreibungssprache IDL (Interface Definition Language) definiert, bei der es sich um eine reine Schnittstellen-Beschreibungssprache handelt. Die Vererbung (inheritance) dieser Interfaces erlaubt es daß ein Objekt mehrere Schnittstellen unterstützt.

In CORBA wird auf ein Objekt direkt über diese CORBA spezifische Schnittstelle zugegriffen. Die Implementierung dieser Schnittstelle ist das Objekt selbst. Es besteht aus Code und Daten und benötigt somit keine Ausführungsinstanz (Agent entity), wie dies der Fall ist, wenn ein Objekt rein durch eine Datenstruktur repräsentiert ist.

Um eine Anforderungsnachricht zu senden benötigt das Objekt CO Zugriff zu der Referenz (Object Reference) des Objektes SO, benötigt Kenntnis über den Typ des Objektes SO und die Operation, die von diesem ausgeführt werden soll. Das Objekt CO initiiert die Anforderungsnachricht, indem es Rufroutinen (stub routines) der Funktionseinheit IDLStube aufruft oder indem sie die Anforderungsnachricht dynamisch mittels der Funktionseinheit DII erzeugt (Dynamic Invocation Interface). Das zweite Vorgehen ermöglicht es hierbei einen Dienst anzufordern, der bei der Entwicklung des Objektes CO noch nicht bekannt war.

Der Empfang der Anforderungsnachricht wird beim Objekt SO durch Funktionen der Funktionseinheit BOA unterstützt (Basic Object Adapter). Es ist auch möglich, daß das Objekt mittels Funktionen der Funktionseinheit SKEL eine Schnittstelle anbietet, die der obigen zweiten Möglichkeit entspricht.

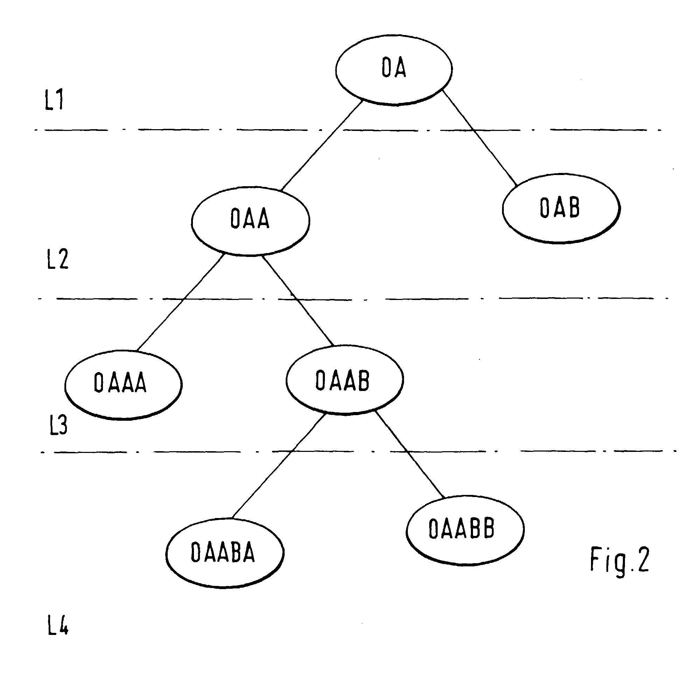

Zwischen den Objekten des Computersystems CS besteht eine logische Beziehung, deren Struktur beispielhaft in Fig. 2 dargestellt ist.

Fig. 2 zeigt 7 Objekte OA bis OAABB, die untereinander in Beziehung stehen. Die Beziehung der Objekte zueinander wird Beziehungsbaum (containment tree) oder Beziehungs-Hierarchie (containment hierarchy) genannt. Jedes Objekt stellt ein Beispiel (object instance) einer speziellen Objekt - Klasse (object class) dar. Die Objekt-Klassen haben eine spezielle Hierarchie, so ist beispielsweise eine speziellere Objekt-Klasse in einer allgemeineren enthalten und eine allgemeinere Objekt Klasse enthält mehrere speziellere Objekt-Klassen. Entsprechendes gilt für die konkreten Objekte (Managed Objects, Object Instances). Das Objekt OA bildet die Wurzel des Beziehungsbaumes. Die Objekte OAA und OAB sind speziellere Objekte, die in dem höheren Objekt OA enthalten sind. Die Objekte OAAA und OAAB sind Objekte, die in dem Objekt OAA enthalten sind und die Objekte OAABA und OAABB sind Objekte, die in dem Objekt OAAB enthalten sind. Das höhere Objekt wird auch als Eltern-Objekt der enthaltenen Objekte bezeichnet, die wiederum als dessen Kind-Objekte bezeichnet werden.

Genauso wie das Anfordern und Erbringen von Diensten wird in CORBA das Erzeugen und das Löschen von Objekten durch spezielle Generierungs-Objekte (factories) durchgeführt. Diese enthalten jeweils einen Satz von Operationen, die geeignet sind, jeweils bestimmte Arten von Objekten zu erzeugen und zu löschen.

Dieser Satz von Operationen wird nun aus den speziellen Generierungs-Objekten in andere Objekte verlagert, deren Hauptaufgabe eigentlich die Erbringung ganz andere Dienste ist. Die Verlagerung dieser Operationen folgt hierbei folgendem Schema: In jedes Eltern-Objekt wird der Satz von Operationen verlegt, der für das Erzeugen und Löschen der diesem nach dem Beziehungsbaum zugeordneten Kind-Objekte zuständig ist. Beim Generieren eines Kind-Objektes zu einem Eltern-Objekt wird dieser Satz von Operationen vererbt und kann bei der Generierung weiter spezialisiert werden, so daß speziellere Erzeugungsfunktionen beispielsweise mit mehr Parametern möglich werden. Objekte (Managed Objects) bilden so Generierungs-Objekte (factories) für ihre unmittelbaren Nachfolger im Abhängigkeitsbaum. Zur Verwaltung dieses Erzeugen und Löschen von Objekten speichert das Objekt eine Liste der möglichen, ihm unmittelbar nachfolgenden Typen von Objekten.

Damit enthält die Schnittstelle dieser Objekte neben den ursprünglich vorhanden Operationen auch die Erzeugungs- und Löschfunktionen für unmittelbar nachfolgende Objekte im Abhängigkeitsbaum.

Soll somit ein Objekt erzeugt oder gelöscht werden, so ist eine entsprechende Anforderungsnachricht an das entsprechende Eltern-Objekt zu senden. Die Semantik dieser Anforderungsnachricht ist hierbei die eines Generierungs-Objekts. Aufgrund der logischen Beziehung ist das Eltern-Objekt leicht zu lokalisieren, so daß das zuständige Generierungs-Objekt einfach aufzufinden ist.

Es ist auch möglich, daß diese Art der Erzeugung und des Löschens von Objekten nicht auf alle Objekte des Computersystems CS angewendet wird, sondern nur auf die einem Teilbaum des Beziehungsbaumes zugeordneten Objekte. Auch eine Trennung der Lösch- von der Generierungsfunktion wäre möglich. So könnten die Lösch-Operationen auch in die Schnittstelle des zu löschenden Objekts integriert werden.

Müssen Generierungs-Objekte für bestimmte Klassen von Objekten erst noch spezifiziert werden, so ist es auch möglich, auf bereits vorhandene Funktionen zurückzugreifen.

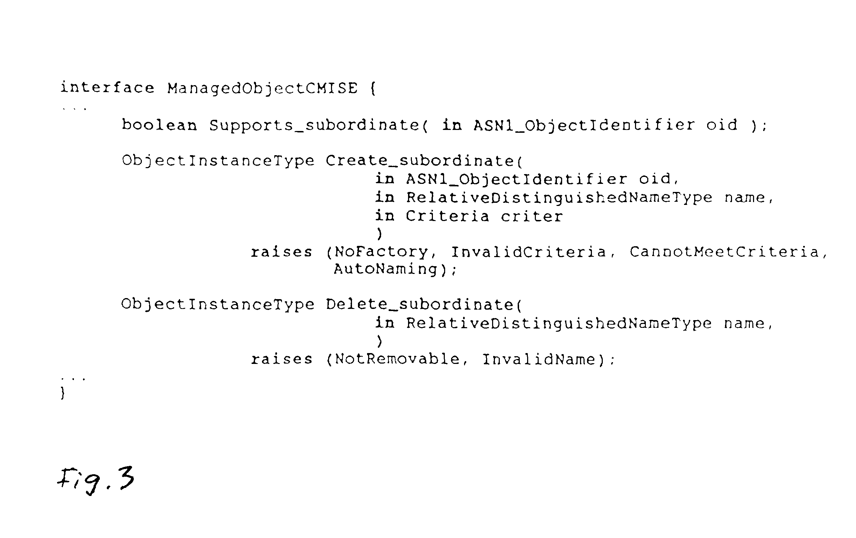

Stehen in dem Computersystem CMISE Operationen zur Verfügung, so können CMISE-Operationen für die Erzeugung- und Löschfunktionen verwendet werden und in einem CMISE Interface weitervererbt werden. Der relevante Teil einer solchen weiterzuvererbenden Schnittstelle ist in Fig. 3 in einer Beschreibungssprache spezifiziert dargestellt.

Die Operationen in Fig. 3 haben hierbei folgende Bedeutung:
- Support subordinate ist hierbei eine Spezifikation der GenericFactory : : supports operation. Es hat einen Objetkt- Identifizierer (object identifier als Eingang anstelle eines mehr allgemeinen Schlüssels (Key).
- Create_subordinate ist eine Spezialisierung von GenericFactory :: create_object. Es wird wieder der Object- Identifizierer (object identifier) als anstelle eines mehr allgemeinen Schlüssels (Key) verwendet. Ein extra Parameter name" ist vorhanden, der das Attribut des erzeugten Objektes verwendet, um es zu benennen. Der Parameter Name" kann jedoch auch in dem letzen Paramter criteria" enthalten sein. Dieser ist derselbe wie in GenericFactory :: create_object one. Es handelt sich um eine Liste von <name, value> Paaren, die irgendeinen der Erzeugungsparameter (initial values, resource constraints, location...) enthalten kann. Die Objektkennung (reference object) wird, soweit eine vorhanden ist, in einem Kriterium abgespeichert. Abweichungen (Exeptions) werden von GenericFactory::creat_object zurückgemeldet. Bis auf eine Rückmeldung, autonaming, die anzeigt, daß der Namens-parameter ignoriert wird, werden die Objekte automatisch benannt.
- Delete_subordinate ist eine Spezialisierung von LifeCycleObject :: remove. Diese Anforderung ist an das Eltern-Objekt gerichtet, so daß dieses die Resourcen verwalten kann, die durch das Löschen des Objekts frei werden. Diese Operation kann eine Zurücksetzungsoperation in dem zurückgesetzten Objekt selbst auslösen, so daß es überprüfen kann, ob es zurücksetzbar ist und so seine eigenen Resourcen löschen kann. Delete_subordinate kann die NotRemovable Abweichung auslösen, genauso wie durch LifeCycleObject:: remove. Es besitzt eine extra InvalidName Abweichung, die zum Ausdruck bringt, daß der zur Verfügung gestellte Name kein existierendes Kind-Objekt identifiziert.

Das zweite Ausführungsbeispiel gibt hierfür ein Beispiel aus dem Bereich des Netzwerkmanagement.

In einem zweiten Ausführungsbeispiel wird nun ebenfalls die Durchführung der erfindungsgemäßen Verfahren in einem erfindungsgemäßen Computersystem beschrieben, das aus einem oder aus mehreren erfindungsgemäßen Rechnereinrichtungen besteht, auf denen jeweils ein Programm-Modul abläuft. Im Gegensatz zum ersten Ausführungsbeispiel handelt es sich bei dem Computersystem jedoch um ein Netzwerkmanagementsystem, bei dem auch nicht CORBA Objekte durch Anpassungsfunktionen so modifiziert werden, daß sie nach außen hin als CORBA Objekte auf der CORBA Infrastruktur agieren. Das Computersystem ist so wie das Computersystem CS nach Fig. 1a ausgestaltet. Die Rechnereinheiten stellen Netzwerkmanagement-Einheiten, beispielsweise Netzelemente (network elements), Netzwerkmanagement-Zentralen (network management center) oder Anpassungeinrichtung (mediation device) dar. Es ist auch möglich, daß das Computersystem noch weitere Aufgaben wie das Verwalten oder Erbringen von Netzdiensten erbringt. Diese Dienste könnten auch auf der TINA -Softwarearchitektur (TINA DPE Service Specification, TINA-C, 1994) basieren.

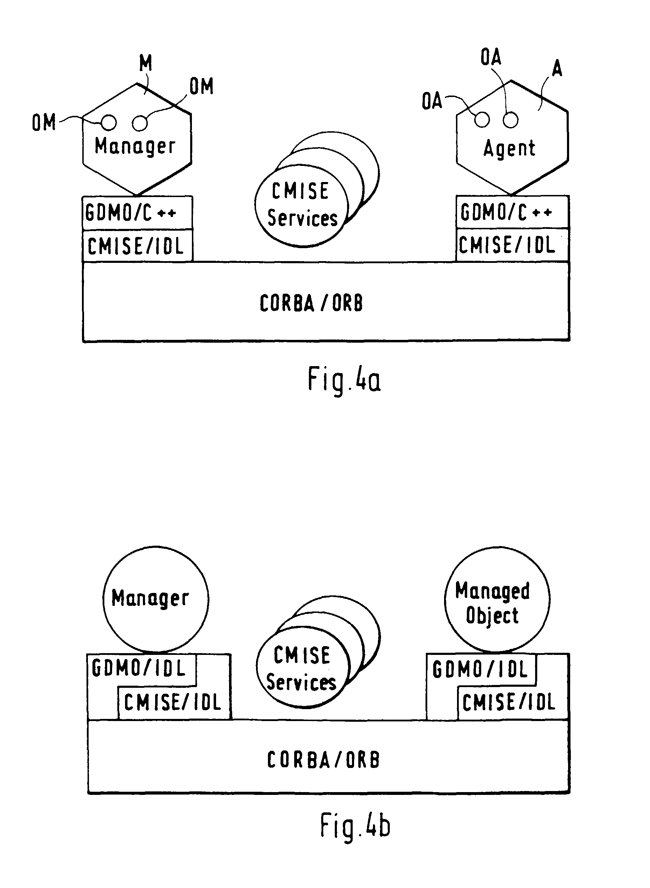

Fig. 4a zeigt eine Darstellung der Kommunikationsmechanismen für die Kommunikation zwischen zwei solcher Netzwerkmanagement-Objekte über die CORBA-Infrastruktur.

Fig. 4a zeigt eine Kommunikationsschicht CORB/ORB, mehrere über diese Kommunikationsschicht allgemein zur Verfügung stehende Dienste CMISE Services, zwei Netzwerkmanagement-Komponenten M und A und jeweils zwei zwischen diesen Objekten und der Kommunikationsschicht CORB/ORB gelegenen Kommunikationsfunktionen GMO/C+ + und CMISE/IDL.

Für den Bereich des Netzwerkmanagements ist von der OSI (Open System Interconnection) ebenfalls ein Objektmodell standardisiert (Management framework for open systems interconnection, ITU-T Recommendation X.700, 1992). Neben dem Objektmodell (SMI = Structure of Management Information) sind auch grundlegende Objekte, ein Set von Management Diensten (CMIS common management information service definition) und ein Netzwerkmanagement-Protokoll (CMIP = Common Management Information Protocol) zur Kommunikation der Objekte untereinander spezifiziert. Objekte sind in der Beschreibungssprache GEMO spezifiziert, die die ASN Syntax verwendet und weitere eigene Makros enthält.

Bei den Komponenten M und A handelte es sich nicht um CORBA-Objekte, sondern jeweils um ein oder mehrere OSI- Objekte OM bzw. OA und eine Manager bzw. Agent Funktionseinheit. Mittels der Agent bzw. Manger Funktionseinheit werden Operationen auf diesen Objekten ausgeführt bzw. Anforderung an andere Objekte versendet. Agent und Manager Funktionseinheit kommunizieren über das CMIP -Protokoll. Aus der Sichtweise des Netzwerkmanagement nimmt die Komponente M die Rolle eines Managers (Manager) und die Komponente A die eines Agenten (Agent) ein.

Die Kommuniktationseinheit GDMO/C++ besteht aus einem oder mehreren speziellen Zugriffs-Objekten, die die Ausführung von CMISE Operationen auf den Objekt OA oder OM ermöglichen.

Die CMISE Management Dienste werden durch ein CMISE-Objekt auf der Seite des Objektes OA realisiert. Die Schnittstelleneinheit CMISE/IDL enthält dieses CMISE-Objekt und die diesem Objekt zugeordneten Dienste. Das CMISE-Objekt der Schnittstelleneinheit CMISE/IDL ist durch ein IDL-Interface spezifiziert ist und agiert und erscheint so nach außen wie ein CORBA-Objekt. Um diese Spezifizierung und damit die Bereitstellung einer CORBA-Scnittstelle zu dem Objekt OA zu ermöglichen, ist eine Typkonvertierung von ASN.1 in IDL Typen notwendig. CMISE-Dienste stellen somit als ein Set von CORBA Objekten zur Verfügung. Durch über die CORBA-lnfrastruktur geleitet CORBA-Anforderung können so CMISE-Operationen auf dem Objekt OA ausgeführt werden. Gleiches gilt für das Objekt MO.

Für das Erzeugen oder Löschen von Objekten wird nun der in Fig. 3 dargestellte Teil in dem Interface weitervererbt.

Eine zweite Möglichkeit der Anbindung von OSI-Objekten über eine CORBA-Infrastruktur ist in Fig. 4b aufgezeigt, die ein drittes Ausführungsbeispiel darstellt.

Fig. 4b zeigt die Kommunikationsschicht CORB/ORB, mehrere über diese Kommunikationsschicht allgemein zur Verfügung stehende Dienste CMISE Services, die Objekte OM und OA und jeweils zwei zwischen diesen Objekten und der Kommunikationsschicht CORB/ORB gelegenen Kommunikationsfunktionen GDMO/IDL und CMISE/IDL

Durch die Schnittstelleneinheit GDMO/IDL werden die in GDMO spezifizierten OSI-Objekte der Komponenten A und M in eine Spezifikation als IDL Schnittstelle übersetzt. Auf ein so spezifiziertes Objekt kann durch klassische CORBA-Nachrichten zugegriffen werden. Jedes dieser OSI-Objekt wird somit in ein reines CORBA Objekt transformiert. Da die Spezifikationen in IDL und ASN.1 von unterschiedlicher Natur sind (Schnittstellenbeschreibung 〈-〉 Objekt- Spezifikation) ist keine vollkommene Übersetzung möglich und nur ein Untermenge von CMISE-Diensten wird über die Schnittstelleneinheit GDMO/IDL angeboten. Dies bedeutet, daß nur eine Untermenge von CMISE Operationen auf den transformierten CORBA-Objekten ausführbar ist.

Für das Löschen und Erzeugen von Objekten mittels CMISE Dienste wird nun zusätzlich eine Schnittstelleneinheit CMISE/IDL vorgesehen. Über diese zusätzliche Schnittstelle wird die in CMISE vorhandene Erzeugungsfunktion (m-create) über eine CORBA Schnittstelle zugänglich gemacht und eine Anwendung dieser Funktion auf die transformierten CORBA-Objekte der Komponente A ermöglicht.

Zum Erzeugen eines Objektes in der Komponente A muß ein Objekt der Komponente M oder ein sonstiges CORBA- Objekt des Computersystems CS das für die Verwaltung der Erzeugung und des Löschens des Objekts zuständige Generierungs-Objekt adressieren. Dieses Generierungs-Objekt ist das Eltern-Objekt des zu erzeugenden Objektes, das ebenfalls ein Objekt der Komponente A ist. Um auf die Erzeugungsfunktion zuzugreifen, wird hierbei über die CMISE/IDL Schnittstelleneinheit auf die CMISE-Erzeugungsfunktion zugegriffen, die über diese Schnittstelleneinheit dem Eltern-Objekt zur Verfügung steht. Die Erzeugung dieses Kind-Objektes wird somit über eine CORBA-Nachricht unter Verwendung der CMISE Semantik und unter Zuhilfenahme von CMISE- Diensten durch ein transformiertes CORBA Objekt durchgeführt.. Auf reziproke Weise wird auf den entsprechen den CMISE Dienst zum Löschen von Objekten zugegriffen.

## Patentansprüche

1. Verfahren zur Unterstützung des Erzeugens eines ersten Objektes in einer Objekt Umgebung, in der das erste und weitere Objekte über CORBA-Mechanismen interagieren, wobei bei dem Verfahren ein zweites Objekt, das ein CORBA-Generierungs-Objekt ist und mindestens eine Funktion zum Erzeugen des ersten Objektes umfaßt, zur Erzeugung des ersten Objektes bereitgestellt wird, **dadurch gekennzeichnet,** daß dem ersten Objekt das gemäß einem Abhängigkeitsbaum unmittelbar vorangehende Eltern-Objekt als zweites Objekt zugeordnet wird und daß in dieses Eltern-Objekt mindestens eine einem CORBA-Generierungs-Objekt entsprechende Funktion zum Erzeugen des ersten Objektes integriert wird.

2. Verfahren nach Anspruch 1, dadurch gekennzeichnet, daß die Zuordnung in einem zentralen Dienst vermerkt wird.

3. Verfahren nach Anspruch 1, dadurch gekennzeichnet, daß in das Eltern-Objekt mindestens eine einem CORBA-Generierungs-Objekt entsprechend Funktion zum Löschen des ersten Objektes integriert wird.

4. Verfahren nach Anspruch 1, dadurch gekennzeichnet, daß in das Eltern-Objekt CMISE-Funktionen als Erzeugungsfunktionen integriert werden.

5. Verfahren nach Anspruch 1, dadurch gekennzeichnet, daß die Erzeugungsfunktionen vom Eltern-Objekt an ein CORBA-Kind-Objekt vererbt werden.

6. Verfahren zum Erzeugen eines ersten Objektes in einer Objekt-Umgebung, in der das erste und weitere Objekte über CORBA-Mechanismen interagieren, wobei bei dem Verfahren eine Erzeugungs-Nachricht an ein CORBA-Generierungs-Objekt gesendet wird, **dadurch gekennzeichnet**, daß die Erzeugungs-Nachricht an das dem ersten Objekt gemäß einem Abhängigkeitsbaum unmittelbar vorangehende Eltern-Objekt gesendet wird und daß das Eltern-Objekt als CORBA-Generierungs-Objekt fungierend die Erzeugung des ersten Objektes durchführt.

7. Verfahren zum Löschen eines ersten Objektes in einer Objekt Umgebung, in der das erste und weitere Objekte über CORBA-Mechanismen interagieren, wobei bei dem Verfahren eine Lösch-Nachricht an ein CORBA-Generierungs-Objekt gesendet wird, **dadurch gekennzeichnet**, daß die Lösch-Nachricht an das dem ersten Objekt gemäß einem Abhängigkeitsbaum unmittelbar vorangehende Eltern-Objekt gesendet wird und daß das Eltern-Objekt als CORBA-Generierungs-Objekt fungierend die Löschung des ersten Objektes durchführt.

8. Rechnereinheit mit einem Programm-Modul, das mit einer CORBA-Schnittstelle zur Interaktion als CORBA-Objekt über CORBA-Mechanismen und mit einem Satz erster Funktionen zur Bereitstellung von Anwendungs-Diensten versehen ist, **dadurch gekennzeihnet**, daß das Programm-Modul eine oder mehrere zweite Funktionen enthält, die so ausgestaltet sind, daß sie einen Dienst als CORBA-Generierungs-Objekt bereitstellen, der das Erzeugen von dem Programm-Modul aus logischer Sicht gemäß einem Abhängigkeitsbaum unmittelbar nachfolgenden Kind-Objekten durchführt.

9. Rechnereinheit nach Anspruch 8, dadurch gekennzeichnet, daß die ersten Funktionen Anwendungs-Dienste für das Netzwerkmanagement sind.

10. Rechnereinheit nach Anspruch 8, dadurch gekennzeichnet, daß die Semantik der zweiten Funktionen die eines CORBA-Generierungs-Objektes ist.

11. Rechnereinheit nach Anspruch 8, dadurch gekennzeichnet daß die Rechnereinheit eine Netzwerkmanagemenf-Komponente ist.

## Claims

1. Procedure for supporting the creation of a first object in an object environment in which the first and other objects interact through the CORBA-mechanisms, such that by means of the procedure a second object, which is a CORBA generating object and comprises at least one function for the creation of the first object, is made available characterised in that an immediately preceding parent object in accordance with a containment tree is assigned as a second object to the first object and that at least one function corresponding to a CORBA-generating object is integrated into this parent object for the creation of the first object.

2. Procedure in accordance with Claim 1 characterised in that the assignment is registered in a central service.

3. Procedure in accordance with Claim 1, characterised in that at least one function corresponding to a CORBA-generating object for the deletion of the first object is integrated into the parent object.

4. Procedure in accordance with Claim 1, characterised in that CMISE-functions are integrated into the parent object as creation functions.

5. Procedure in accordance with Claim 1, characterised in that the creation functions of the parent object are passed on to a CORBA child object.

6. Procedure for the creation of a first object within an object environment in which the first and other objects interact through CORBA mechanisms such that in the course of the procedure a creation-message is sent to a CORBA generating object, characterised in that the creation message is sent to the parent object in accordance with a containment tree directly preceding the first object and that the parent object functioning as a CORBA generating object, carries out the creation of the first object.

7. Procedure for the deletion of a first object within an object environment, in which the first and further objects interact by means of CORBA mechanisms, such that as a result of the procedure, a deletion-message is forwarded to a CORBA generating object, characterised in that the deletion-message to the first object is sent to a directly preceding parent object in accordance with a containment tree and that the parent object functioning as a CORBA-generating object carries out the deletion of the first object.

8. Computer unit with a program module provided with a CORBA-interface for interaction as a CORBA object by means of CORBA-mechanisms and with a set of primary functions for the establishment of application-services, characterised in that the program-module contains one or more secondary functions which have such a form that they make available a service as a CORBA generating object, which effects from the program module the creation of child objects which are directly succeeding child objects from a logical point of view in accordance with a containment tree.

9. Program module in accordance with Claim 8, characterised in that the first functions are application services for the network management.

10. Program module in accordance with Claim 8, characterised in that the semantics of the second function are those of a CORBA generating object.

11. Computer unit in accordance with Claim 8, characterised in that the computer unit is a network management component.

## Revendications

1. Procédé d'assistance de création d'un premier objet dans un environnement d'objets dans lequel le premier objet et les autres objets interagissent par l'intermédiaire de mécanismes CORBA, à l'occasion de quoi, dans le procédé, un second objet qui est un objet de création CORBA et comprend au moins une fonction pour la création du premier objet, est mis à disposition pour la création du premier objet, caractérisé en ce que l'objet parent précédant directement dans un arbre de dépendance est attribué au premier objet en tant que second objet et en ce que, dans cet objet parent, est intégrée au moins une fonction correspondant à un objet de création CORBA pour créer le premier objet.

2. Procédé selon la revendication 1, caractérisé en ce que l'affectation est notée dans un service central.

3. Procédé selon la revendication 1, caractérisé en ce que, dans l'objet parent, est intégrée au moins une fonction correspondant à un objet de création CORBA pour supprimer le premier objet.

4. Procédé selon la revendication 1, caractérisé en ce que, dans l'objet parent, sont intégrées des fonctions CMISE comme fonctions de création.

5. Procédé selon la revendication 1, caractérisé en ce que les fonctions de création sont transmises par un objet parent à un objet enfant CORBA.

6. Procédé de création d'un premier objet dans un environnement d'objets dans lequel le premier objet et les autres objets interagissent par l'intermédiaire de mécanismes CORBA, à l'occasion de quoi, dans le procédé, un message de création est envoyé à un objet de création CORBA, caractérisé en ce que le message de création est envoyé à l'objet parent précédant directement le premier objet conformément à un arbre de dépendance et en ce que l'objet parent fonctionnant comme objet de création CORBA effectue la création du premier objet.

7. Procédé de suppression d'un premier objet dans un environnement d'objets dans lequel le premier objet et les autres objets interagissent par l'intermédiaire de mécanismes CORBA, à l'occasion de quoi, dans le procédé, un message de suppression est envoyé à un objet de création CORBA, caractérisé en ce que le message de suppression est envoyé à l'objet parent précédant directement le premier objet conformément à un arbre de dépendance et en ce que l'objet parent fonctionnant comme objet de création CORBA effectue la suppression du premier objet.

8. Unité d'ordinateur avec un module de programmes qui est muni d'une interface CORBA pour l'interaction en tant qu'objet CORBA par l'intermédiaire de mécanismes CORBA et d'une série de premières fonctions pour la mise à disposition de services d'application, caractérisée en ce que le module de programmes comprend une ou plusieurs secondes fonctions qui sont conçues de telle sorte qu'elles mettent à disposition un service en tant qu'objet de création CORBA qui effectue la création d'objets enfants suivant directement le module de programmes d'un point de vue logique, conformément à un arbre de dépendance.

9. Unité d'ordinateur selon la revendication 8, caractérisée en ce que les premières fonctions sont des services d'application pour la gestion du réseau.

10. Unité d'ordinateur selon la revendication 8, caractérisée en ce que la sémantique des secondes fonctions est celle d'un objet de création CORBA.

11. Unité d'ordinateur selon la revendication 8, caractérisée en ce que l'unité d'ordinateur est une composante de la gestion du réseau.
